(19) Europäisches Patentamt / European Patent Office / Office européen des brevets

(11) **EP 3 876 182 A1**

(12) **EUROPEAN PATENT APPLICATION**
published in accordance with Art. 153(4) EPC

(43) Date of publication:
**08.09.2021 Bulletin 2021/36**

(21) Application number: **19879492.7**

(22) Date of filing: **25.10.2019**

(51) Int Cl.:
***G06Q 40/06*** (2012.01)

(86) International application number:
**PCT/JP2019/041985**

(87) International publication number:
**WO 2020/090674 (07.05.2020 Gazette 2020/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.10.2018 JP 2018205045**

(71) Applicant: **Hitachi, Ltd.**
**Tokyo 100-8280 (JP)**

(72) Inventors:
• **OGAWA, Jun**
**Tokyo 100-8280 (JP)**
• **KIMURA, Yukiyo**
**Tokyo 100-8280 (JP)**
• **OKUYAMA, Takuya**
**Tokyo 100-8280 (JP)**
• **YAMAOKA, Masanao**
**Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(54) **INFORMATION PROVIDING DEVICE AND INFORMATION PROVIDING METHOD**

(57)    An information providing device 100 is configured to include a storage unit 101 that stores price information 125 on various financial products, and a calculation unit 104 that performs calculation on an Ising model in which a price increase-decrease event of each financial product on an estimated price determined based on an actual price of the financial product indicated in the price information and a sensitivity of the financial product to another financial product is set as a spin, and in which sensitivities between prices of the financial products are set as the strengths of interactions between the spins, wherein the calculation unit outputs, to a specified device, information on a future price of at least one financial product of the financial products based on a result of the calculation.

FIG. 4

EP 3 876 182 A1

**Description**

[Technical Field]

The present invention relates to an information providing device and an information providing method and more specifically to a technique for estimating information on financial products efficiently and with favorable accuracy.

[Background Art]

The concept of what is called a combinatorial optimization problem for searching for a solution that maximizes or minimizes desired parameters under specified conditions can be applied to complex problems in the real world such as how to solve traffic congestion and how to reduce logistics costs in a global supply chain.

However, since such a problem handles an enormous number of solution candidates, it is difficult to solve the problem within a practical time without a computer having appropriate calculation performance, such as a super computer or a quantum computer.

For example, for conventional techniques concerning quantum computers, there is proposed a technique (see PTL 1) concerning a computer that enables high-speed calculation for an inverse problem or combinatorial optimization problem requiring exhaustive search. In this technique, spins are used as variables in calculation, and a problem intended to be solved is set as the interactions between spins and a local field acting on each spin. All the spins are made oriented in one direction by an external magnetic field at time t = 0, and the external magnetic field is gradually reduced such that it becomes zero at time t = $\tau$. The spins are time-evolved on the assumption that the direction of each spin is determined by the effective magnetic field determined by the external magnetic field at each site and all actions of the interactions between the spins at time t. In this process, the spins are not completely aligned with the directions of the effective magnetic fields but are oriented in quantum-mechanically corrected directions so that the system will appropriately maintain the ground state.

[Citation List]

[Patent Literature]

[PTL 1] WO2016/157333

[Summary of Invention]

[Technical Problem]

Unfortunately, there has been no proposal for a configuration in which quantum computer techniques as above are appropriately applied to financial products. For example, the prices of financial products change due to various factors that affect the financial products (for example, the prices of other financial products and the like). Those factors themselves change, and the factors also affect one another. In addition, such changes vary in the degree.

If a general computer is used to perform price estimation or the like of financial products having such conditions, the amount of calculation increases exponentially according to the number of factors as described above, and it requires an enormous amount of time or ends up with an overflow.

Hence, an object of the present invention is to provide a technique for estimating information on financial products efficiently with favorable accuracy.

[Solution to Problem]

In order to solve the above problems, an information providing device of this disclosure to solve the above objective comprises a storage unit that stores price information on various financial products, and a calculation unit that performs calculation on an Ising model in which a price increase-decrease event of each financial product on an estimated price determined based on an actual price of the financial product indicated in the price information and a sensitivity of the financial product to another financial product is set as a spin, and in which sensitivities between prices of the financial products are set as the strengths of interactions between the spins, wherein the calculation unit outputs, to a specified device, information on a future price of at least one financial product of the financial products based on a result of the calculation.

An information providing method of this disclosure comprises performing, in an information processing device including a storage unit that stores price information on various financial products, calculation on an Ising model in which a price increase-decrease event of each financial product on an estimated price determined based on an actual price of the financial product indicated in the price information and a sensitivity of the financial product to another financial product is set as a spin, and in which sensitivities between prices of the financial products are set as the strengths of interactions between the spins; and outputting, from the information processing device to a specified device, information on a future price of at least one financial product of the financial products based on a result of the calculation.

[Advantageous Effects of Invention]

The present invention makes it possible to estimate information on financial products efficiently with favorable accuracy.

[Brief Description of Drawings]

[Fig. 1] Fig. 1 is a network configuration diagram including an information providing device of the present embodiment.
[Fig. 2] Fig. 2 is a diagram illustrating an example 1 explaining how currency pairs affect one another in the present embodiment.
[Fig. 3] Fig. 3 is a diagram illustrating example 2 for explaining how currency pairs affect one another in the present embodiment.
[Fig. 4] Fig. 4 is a diagram illustrating a hardware configuration example of the information providing device in the present embodiment.
[Fig. 5] Fig. 5 is a diagram illustrating a timing chart example in the present embodiment.
[Fig. 6] Fig. 6 is a diagram illustrating a flowchart of the basic concept in the present embodiment.
[Fig. 7] Fig. 7 is a diagram illustrating a data configuration example of price information in the present embodiment.
[Fig. 8] Fig. 8 is a diagram illustrating a data configuration example of sensitivity information in the present embodiment.
[Fig. 9] Fig. 9 is a diagram illustrating a procedure example 1 of an information providing method in the present embodiment.
[Fig. 10] Fig. 10 is a diagram illustrating a screen example 1 in the present embodiment.
[Fig. 11] Fig. 11 is a diagram illustrating a screen example 2 in the present embodiment.
[Fig. 12] Fig. 12 is a diagram illustrating a price estimation example 1 in the present embodiment.
[Fig. 13] Fig. 13 is a diagram illustrating a price estimation example 2 in the present embodiment.
[Fig. 14] Fig. 14 is a diagram illustrating a procedure example 2 of the information providing method in the present embodiment.
[Fig. 15] Fig. 15 is a diagram illustrating a screen example 4 in the present embodiment.

[Description of Embodiments]

---Regarding Annealing Machine---

As described in the above PTL 1, the applicant has developed quantum computing technologies to aim to solve various problems related to, for example, exhaustive search problems based on big data (including concepts of combinatorial optimization problems).

For such exhaustive search problems, there are, in general, great expectations for quantum computers. Quantum computers are based on basic elements called qubits which express "0" and "1" simultaneously. Thus, all the solution candidates can be simultaneously calculated as initial values, and there is a possibility that quantum computers can perform exhaustive search. However, quantum computers need to maintain quantum coherence over the entire calculation time.

Under these circumstances, a method called adiabatic quantum computation has been attracting attention (Reference: E. Farhi, et al., "A quantum adiabatic evolution algorithm applied to random instances of an NP-complete problem," Science292, 472 (2001).). This method converts a problem such that the ground state of a certain physical system is the solution, and seeks to find the solution through finding the ground state.

Assume that $H^p$ is a Hamiltonian of a physical system into which a problem is set. Here, at the calculation start point, the Hamiltonian is not $H^p$ but another Hamiltonian $H^0$ the ground state of which is clear and easy to prepare. Next, the Hamiltonian is shifted from $H^0$ to $H^p$ while taking a sufficient time. By taking a sufficient time, the system keeps remaining in the ground state, and it is possible to obtain the ground state of the Hamiltonian $H^p$. This is the principle of adiabatic quantum computation. Defining that $\tau$ is the computation time, the Hamiltonian is expressed as Equation (1).
[Math. 1]

$$\hat{H}(t) = \left(1 - \frac{t}{\tau}\right)\hat{H}_0 + \frac{t}{\tau}\hat{H}_p$$

$$(1)$$

The Hamiltonian is time-evolved based on the Schrodinger equation of Equation (2) to obtain the solution.
[Math. 2]

$$i\hbar \frac{\partial}{\partial t}|\psi(t)\rangle = \hat{H}(t)|\psi(t)\rangle$$

$$(2)$$

Adiabatic quantum computation is applicable to problems that require exhaustive search, and the solution can be reached in a one-way process. However, if the calculation process needs to follow the Schrodinger equation of Equation (2), the quantum coherence needs to be maintained as in the case of quantum computers.

Meanwhile, the quantum computer repeats gate operations for 1 qubit or between 2 qubits, while adiabatic quantum computation makes the entire qubit system interact simultaneously. Hence, the ideas for coherence are different.

Think about a gate operation for a qubit, for example. In this operation, if there is an interaction between the qubit and another qubit, it can cause decoherence. However, in adiabatic quantum computation, since all the qubits are made to interact simultaneously, decoherence does not occur unlike this example. Considering this difference, adiabatic quantum computation is thought to be more robust in terms of decoherence than quantum computers.

As described above, adiabatic quantum computation is effective for difficult problems such as ones that require exhaustive search. Then, spins are used as variables in calculation, and a problem to be solved is set as interactions between spins and a local field acting on each spin.

All the spins are made to be oriented in one direction at time t = 0 by using an external magnetic field, and the strength of the external magnetic field is gradually decreased so as to becomes zero at time $t = \tau$.

Each spin is time-evolved based on the assumption that the orientation of the spin is determined according to the effective magnetic field determined by the external magnetic field at each site and the interactions between the spins at time t.

In this process, the orientation of each spin is not completely aligned with the effective magnetic field, but each spin is oriented in a quantum-mechanically corrected direction so that the system can approximately maintain the ground state.

In addition, a term (relaxation term) for keeping the orientation of each spin in its original orientation during time evolution is added to the effective magnetic field to improve the convergence of the solution.

The information providing device in the present embodiment is assumed to be an annealing machine that performs the aforementioned adiabatic quantum computation. However, it is, of course, not limited to only this configuration, but the present invention is applicable to any device capable of appropriately solving combinatorial optimization problems according to the information providing method of the present invention. Specifically, applicable configurations include not only hardware including electronic circuits (digital circuits or the like) implemented according to an annealing method but also methods including superconducting circuits or the like. Alternatively, hardware that supports an Ising model in a method other than annealing methods is possible. The examples include laser network methods (optical parametric oscillation) and quantum neural networks. The present invention can be implemented also by using quantum gate methods in which the calculation performed with an Ising model is replaced with gates such as Hadamard gates, rotation gates, and control-not gates, although part of the idea is different as described earlier.

---Network Configuration---

Hereinafter, an embodiment of the present invention will be described in detail with reference to the drawings.

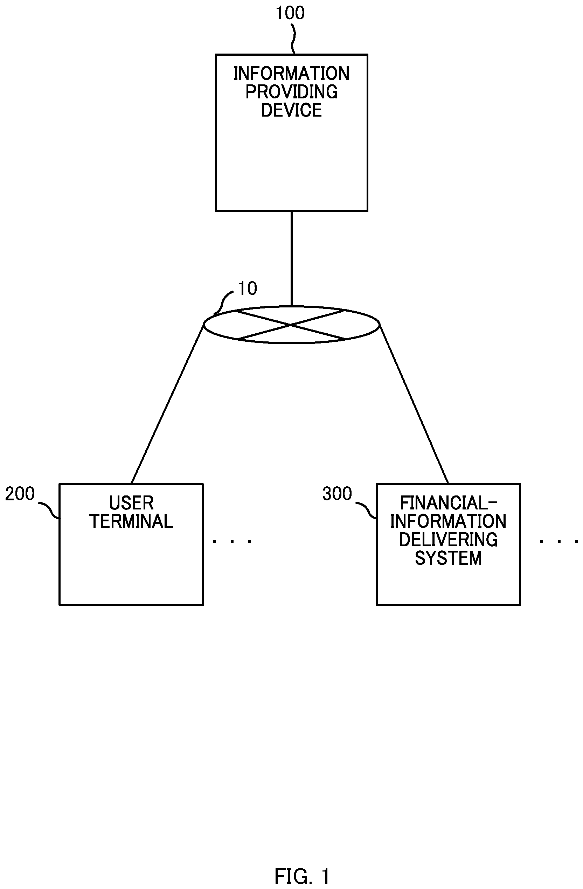

Fig. 1 is a network configuration diagram including an information providing device 100 of the present embodiment.

The information providing device 100 illustrated in Fig. 1 is a computer device that estimates information on financial products efficiently and with favorable accuracy, which is specifically assumed to be an annealing machine as an example. Since an overview of an annealing machine has been mentioned based on PTL 1, detailed descriptions of the concrete configuration, operations, and the like of the information providing device 100 will be omitted as appropriate (the same applies to the following descriptions).

The information providing device 100 of the present embodiment is coupled to a user terminal 200 and a financial-information providing-distributing system 300 via an appropriate network 10 such as the Internet so that they can communicate data with one another.

In this configuration, the user terminal 200 is a terminal that receives information on financial products provided from the information providing device 100.

The users of this user terminal 200 can be assumed to be, specifically, people in charge of institutional investors, such as financial institutions and insurance companies, as well as general individual investors or the like.

The information on financial products provided by the information providing device 100 is assumed to be information indicating whether there is a difference between the price of a specified financial product fixed at the present time and an estimated price of the product expected at a specified time in the future and information on the degree of the difference. If there is a difference between these prices, the larger the difference, the greater the significance of the opportunity for what is called "arbitration in stock". Thus, the aforementioned users who receive such information can recognize preferable investment opportunities with appropriate accuracy.

The financial-information delivering system 300 is a system that delivers price information on various financial products to the information providing device 100.

This financial-information delivering system 300 can be assumed to be a server device operated by organizations having price information on financial products, such as various financial institutions, securities companies, and government agencies.

Examples of the aforementioned various financial products can be assumed to include stocks, products in future markets, foreign exchange. Examples of the price information can be assumed to include stock indexes, product future prices, foreign exchange rates, foreign exchange forward rates, long/short open position ratios, the volatilities of various indicators, and risk reversals.

In the case where a plurality of elements having interdependencies (including both the concept of the one between currency pairs and the concept of the one between currencies included in a currency pair) are always changing, like currency pairs in the aforementioned foreign exchange markets, it is assumed that an imbalance is occurring at a certain time.

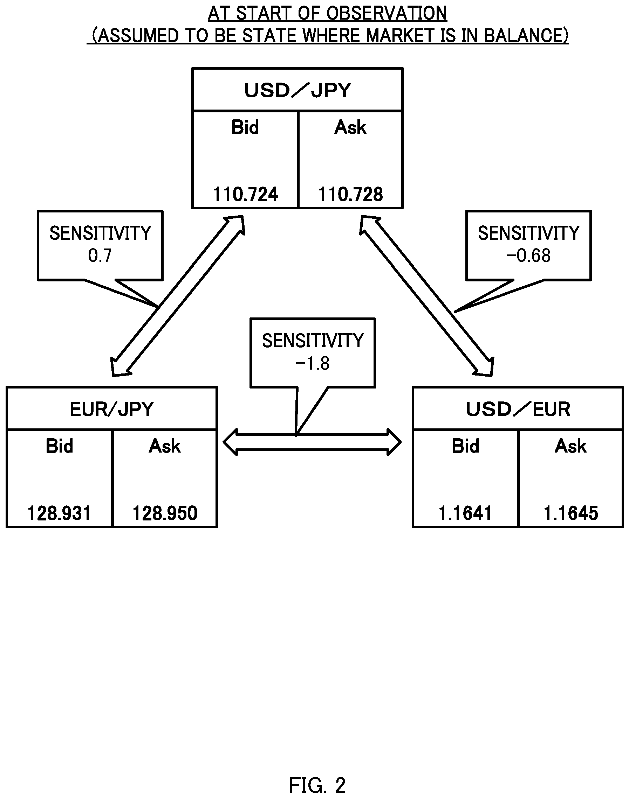

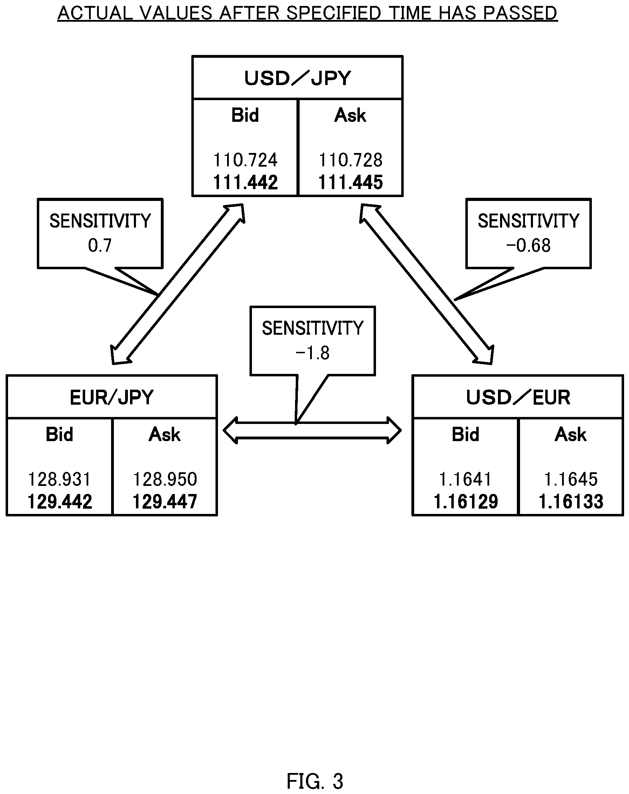

As a specific example of such a situation, Figs. 2 and 3 illustrate a situation in which the rates of a currency pair at a certain time point (when they are in balance in a market) change according to the sensitivities between currency pairs after a specified time passes.

For example, in the case of USD/JPY and EUR/JPY, which are currency pairs having a positive correlation of "0.7" in a foreign exchange market, in a phase in which the rate of USD/JPY has increased, but the rate of the other pair, EUR/JPY, has not yet shown a corresponding increase, there is a difference between the actual rate of EUR/JPY and the rate value to which the rate should be eventually settled (the price estimated according to the sensitivity to USD/JPY, in other words, the estimated price). It can be said that this is an imbalanced state.

As above, the information providing device 100 detects the aforementioned difference in the prices of financial products, evaluates the imbalanced state (takes it that the larger the difference, the more imbalanced), and delivers the information to the user terminal 200.

In conventional cases, regarding calculation of the aforementioned estimated prices and differences, as the number of elements, specifically, the number of information pieces on the prices of financial products increases, the amount of calculation increases exponentially, and it takes a long time to complete the calculation. However, Employing the information providing device 100 using an annealing machine enables calculation, not being affected much by the increase in the number of elements.

---Hardware Configuration---

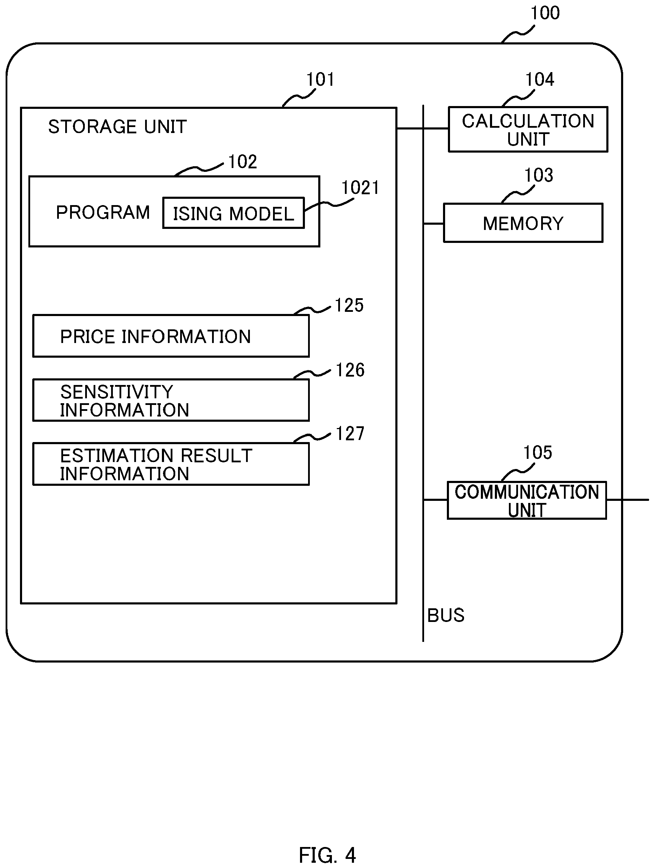

The hardware configuration of the information providing device 100 of the present embodiment is as illustrated in Fig. 4. Specifically, the information providing device 100 includes a storage unit 101 including an appropriate nonvolatile storage device such as a solid state drive (SSD) or a hard disk drive, memory 103 including a volatile storage device such as RAM, a calculation unit 104 such as a CPU that, for example, reads a program 102 stored in the storage unit 101 into the memory 103 and executes it to perform overall control of the device itself as well as various determinations, calculations, and control processes, and a communication unit 105 that is coupled with the network 10 and performs communication processes with other devices.

In the case where the information providing device 100 is a stand-alone machine, it is preferable that the information providing device 100 further include an input unit for receiving key input or voice input from the user and an output device such as a display for displaying processing data.

The storage unit 101 stores, in addition to the program 102 for implementing the functions necessary as the information providing device of the present embodiment, at least price information 125 on financial products and sensitivity information 126. Details of these pieces of information will be described later.

The program 102, specifically, the algorithm for implementing the operation of the annealing machine, holds information on an Ising model 1021 which is a problem to be solved. This Ising model 1021 is set in advance by the administrator or the like based on various kinds of information on target financial products about which information is provided and other financial products that affect the target financial products.

Note that the adiabatic quantum computation described in the overview of the annealing machine is also called quantum annealing, in which the classical annealing concept is applied to quantum mechanics. Specifically, adiabatic quantum computation can be interpreted as a computation method that is originally capable of classical operation and to which quantum-mechanical effects are added to improve the performance in terms of high-speed operation and the correct rate of solutions. In light of the interpretation, the present invention provides a calculation method and calculation device that are classical but include quantum-mechanical effects by using a calculation unit that itself is classical but introducing parameters determined quantum-mechanically in the calculation process.

Based on the above concept, the following example illustrates a classical algorithm for obtaining the ground state as a solution and a device that implements the algorithm, while explaining the relationship with adiabatic quantum computation.

In the information providing device 100 on the above premise, N variables $s_j^z$ (j = 1, 2, ..., N) take a value in the range of $-1 \leq s_j^z \leq 1$, and a problem is set to local fields $g_j$ and the interactions between variables $J_{ij}$ (i, j = 1, 2, ..., N).

In the calculation unit 104, time is divided into m steps, and the calculation is performed discretely from t = to (to = 0) to t = $t_m$ ($t_m = \tau$). To calculate the variables $S_j^z(t_k)$ at time tk, $B_j^z(t_k) = \{\Sigma_i J_{ij} S_i^z(t_{k-1}) + g_j + \text{sgn}(s_j^z(t_{k-1})) \cdot 9_{pina}\} \cdot t_k/\tau$ or $B_j^z(t_k) = \{\Sigma_i J_{ij} S_i^z(t_{k-1}) + g_j + 9_{pinb} \cdot S_j^Z(t_{k-1}) \cdot t_k/\tau\}$ is calculated by using the values of the variables $S_j^z(t_{k-1})$ (i = 1, 2, ..., N) at the previous time $t_{k-1}$ and the coefficient $9_{pina}$ or $9_{pinb}$ of the relaxation term. A function f is determined so that the value range of the aforementioned variables $S_j^z(t_k)$ is $-1 \leq S_j^z(t_k) \leq 1$ and that $S_j^z(t_k) = f(B_j^z(t_k), t_k)$. As the time step are advanced from t = to to t = tm, the aforementioned variables $S_j^z$ are made closer to -1 or 1. In the end, the solution is determined such that if $s_j^z < 0$, $S_j^{zd} = -1$, and if $S_j^z > 0$, $S_j^{zd} = 1$.

The coefficient $g_{pinb}$ is, for example, a value between 50% and 200% of the average value of $|J_{ij}|$. Regarding the local fields $g_j$ for setting the problem, a correction term $\delta g_j'$ may be added to $g_j'$ only for a site j' to increase the multitude of $g_j'$ only for the site j'. Here, the correction term $\delta g_j'$ is, for example, a value between 10% and 100% of the average value of $|J_{ij}|$.

Next, the basic principle of the annealing machine will be described, starting from quantum-mechanical description and moving to a classical method.

The ground state search problem of the Ising spin-Hamiltonian given by Equation (3) includes a problem in a classification called NP-hard and is known to be a useful problem (Reference: F. Barahona, "On the computational complexity of Ising spin glass models," J. Phys. A: Math. Gen. 15, 3241 (1982).).

[Math. 3]

$$\hat{H}_{\mathrm{p}} = -\sum_{i>j} J_{ij} \hat{\sigma}_i^z \hat{\sigma}_j^z - \sum_j g_j \hat{\sigma}_j^z$$

$$(3)$$

$J_{ij}$ and $g_j$ are problem setting parameters, and $\sigma^{\wedge Z}$ is the z component of the Pauli spin matrix, which takes on an eigenvalue of $\pm 1$. The symbols i and j indicate the site of a spin. An Ising spin is a variable that can take only on values of $\pm 1$. Since the eigenvalue of $\sigma^{\wedge Z}$ is $\pm 1$ in Equation (3), Equation (3) is an Ising spin system.

The Ising spins in Equation (3) do not have to be spins literally but may be physically anything as long as the Hamiltonian is described by Equation (3).

For example, the increase and decrease in a financial product price may be associated with $\pm 1$, the high and low of a logic circuit may be associated with $\pm 1$. In addition, the vertically polarized waves and horizontally polarized waves of light may be associated with $\pm 1$, or the phases of 0 and $\pi$ may be associated with $\pm 1$.

In the method illustrated here as an example, the calculation system is prepared, as in adiabatic quantum computation, in the ground state of the Hamiltonian given by Equation (4) at time t = 0.

[Math. 4]

$$\hat{H}_0 = -\gamma \sum_j \hat{\sigma}_j^x$$

$$(4)$$

Here, $\gamma$ is a constant of proportionality determined according to the strength of the external field acting uniformly on all the sites j, and $\sigma^{\wedge x}_j$ is the x component of the Pauli spin matrix. In the case where the calculation system is based on spins themselves, the external field means a magnetic field.

Equation (4) corresponds to application of a transverse magnetic field, and all the spins are oriented in the x direction ($\gamma > 0$) in the ground state. Although the Hamiltonian for problem setting was defined as an Ising spin system having only the z component, Equation (4) includes the x component of the spin. Thus, the spin in the course of calculation is not of an Ising type but a vector type (Bloch vector). the process started with the Hamiltonian of Equation (4) at t = 0, and as time t advances, the Hamiltonian is gradually changed. In the end, the Hamiltonian is made to be the one described in Equation (3), the ground state of which is obtained as the solution.

[Math. 5]

$$\hat{H} = -\boldsymbol{B} \cdot \hat{\boldsymbol{\sigma}}$$

$$(5)$$

Here, $\sigma^{\wedge}$ expresses the three components of the Pauli spin matrix shown as a vector. The ground state is the state in which the spins are oriented in the magnetic field directions, which can be expressed as $<\sigma^{\wedge}> = B/|B|$, where $<\cdot>$ is the quantum-mechanically expectation value. Since the spin in the adiabatic process always seeks to keep the ground state, the orientation of the spin always follows the direction of the magnetic field.

The above discussion can be extended to a multi-spin system. At t = 0, the Hamiltonian is given by Equation (4). This means that the magnetic field $B_j^X = \gamma$ is applied to all the spins uniformly. When t > 0, the x component of the magnetic field gradually decreases, which is expressed as $B_j^X = \gamma(1 - t/\tau)$. The z component is affected by the interactions between spins, and thus the effective magnetic field is expressed as Equation (6).

[Math. 6]

$$\hat{B}_j^z(t) = \frac{t}{\tau}\left(\sum_{i \neq j} J_{ij} \hat{\sigma}_i^z + g_j\right)$$

$$(6)$$

The orientation of the spin can be defined as $<\sigma^{\wedge z}>/<\sigma^{\wedge X}>$, and thus, if the orientation of the spin follows the effective magnetic field, the orientation of the spin is determined by Equation (7).

[Math. 7]

$$\left\langle \hat{\sigma}_j^z \right\rangle \Big/ \left\langle \hat{\sigma}_j^x \right\rangle = \left\langle \hat{B}_j^z(t) \right\rangle \Big/ \left\langle \hat{B}_j^x(t) \right\rangle$$

$$(7)$$

Although Equation (7) is quantum-mechanically expressed, it includes expectation values. Thus, Equation (7) is a relational expression handling classical quantities unlike Equations (1) to (6).

Since classical systems do not have nonlocal correlation (quantum entanglement) that quantum mechanics have, the orientation of the spin should be perfectly determined by the local field at each site, and Equation (7) determines the behavior of a classical spin system. Since a quantum system has nonlocal correlation, Equation (7) will be modified, and this will be described later. Here, the classical system determined by Equation (7) will be described to explain the basic configuration of the invention.

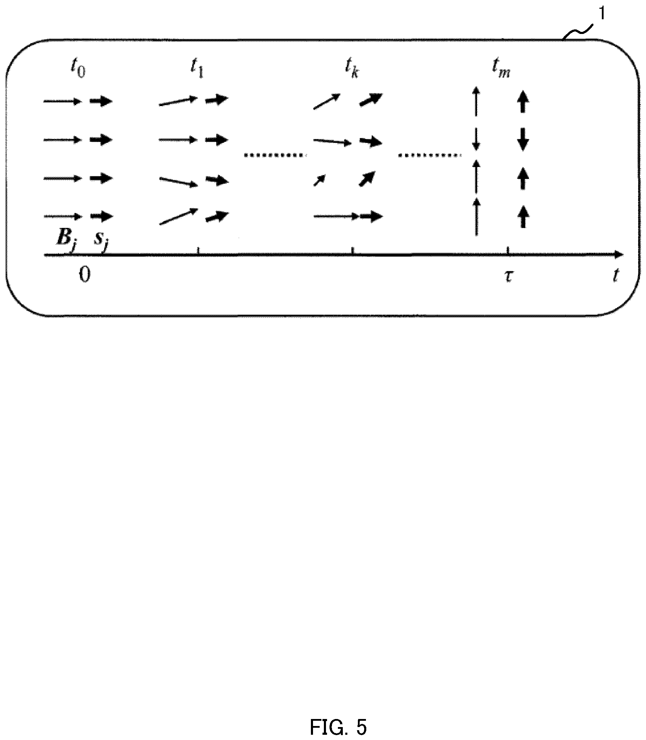

Fig. 5 illustrates a timing chart (1) for obtaining the ground state of a spin system. Since the illustration in Fig. 5 is about classical quantities, the spin of the site j is expressed with $s_j$ not with $\sigma^{\wedge}j$. Along with it, the effective magnetic fields $B_j$ in Fig. 5 are classical quantities. At t = 0, the effective magnetic fields $B_j$ oriented to the right are applied to all the sites, and all the spins $S_j$ are initialized so as to be oriented to the right.

As the time t passes, a magnetic field in the Z-axis direction and the interactions between spins are gradually applied to the spins. The spins are eventually oriented in the +z direction or the -z direction, and the z component of the spin $S_j$ becomes $s_j^z = +1$ or -1. The time t should ideally be continuous, but in an actual calculation process, the time t may be discrete to improve convenience. In the following description, the time t is discrete.

The spins illustrated here as an example have not only z components but also x components; hence, they are vector spins. It is understood also from Fig. 5 that the spins have behavior as vectors. The reason why y components have not been mentioned is that since the direction of the external field was set in the xz plane, the external field does not have the y component, and thus $<\sigma^{\wedge Y}> = 0$.

The spins in the calculation system are assumed to be tree-dimensional vectors having a magnitude of 1 (which are called Bloch vectors, and the state of the vector can be described by a point on a spherical surface). However, in the case of the axis setting in the example illustrated in Fig. 5, only two dimensions have to be considered (the state can be described by a point on a circle).

Here, since $\gamma$ is constant, $B_j^x(t) > 0$ ($\gamma > 0$) or $B_j^x(t) < 0$ ($\gamma < 0$) holds. In this case, the two-dimensional spin vector can be described by only a semicircle, and thus, if $Sj^z$ is specified with [-1,1], the two-dimensional spin vectors are determined by one variable $S_j^z$. Thus, although in the example here, the spin is a two-dimensional vector, the spin can be expressed as a one-dimensional continuous variable having a value range of [-1,1].

In the timing chart of Fig. 5, the effective magnetic field is calculated for each site at time $t = t_k$, and the value is used to calculate the orientation of each spin at $t = t_k$ using Equation (8).

[Math. 8]

$$ s_j^z\left(t_k\right) \Big/ s_j^x\left(t_k\right) = B_j^z\left(t_k\right) \Big/ B_j^x\left(t_k\right) $$

$$(8)$$

Since Equation (8) is a classical quantity expression into which Equation (7) is rewritten, Equation (8) does not have symbols of <•>.

Next, the effective magnetic fields at $t = t_{k+1}$ are calculated using the values of the spins at $t = t_k$. The effective magnetic fields at each time are specifically shown in Equations (9) and (10).

[Math. 9]

$$ B_j^x\left(t_{k+1}\right) = \left(1 - \frac{t_{k+1}}{\tau}\right)\gamma $$

$$(9)$$

[Math. 10]

$$B_j^z(t_{k+1}) = \frac{t_{k+1}}{\tau}\left(\sum_{i \neq j} J_{ij} s_i^z(t_k) + g_j\right)$$

(10)

Hereinafter, the spins and the effective magnetic fields will be alternately calculated according to the procedure schematically shown in the timing chart of Fig. 5.

In a classical system, the magnitude of the spin vector is 1. In this case, each component of the spin vector is expressed as $S_j^z(t_k) = \sin\theta$, and $S_j^x(t_k) = \cos\theta$ using the parameter $\theta$ defined by $\tan\theta = B_j^z(t_k)/B_j^x(t_k)$.

These expressions can be rewritten into $S_j^z(t_k) = \sin(\arctan(B_j^z(t_k)/B_j^x(t_k)))$ and $S_j^x(t_k) = \cos(\arctan(B_j^z(t_k)/B_j^x(t_k)))$.

As can be clearly seen from Equation (9), the variable of $B_j^x(t_k)$ is only $t_k$, and $\tau$ and $\gamma$ are constants. Hence, $S_j^z(t_k) = \sin(\arctan(B_j^z(t_k)/B_j^x(t_k)))$ and $S_{jx}(t_k) = \cos(\arctan(B_j^z(t_k)/B_j^x(t_k)))$ can be expresses as generalized expressions such as $S_j^z(t_k) = f_1(B_j^z(t_k), t_k)$ and $S_j^x(t_k) = f_2(B_j^z(t_k), t_k)$ which are functions having $B_j^z(t_k)$ and $t_k$ as variables.

Here, since the spin is described as a two-dimensional vector, there are two components of $S_j^z(t_k)$ and $S_j^x(t_k)$. However, if $B_j^z(t_k)$ is determined based on Equation (10), $S_j^x(t_K)$ is not necessary.

This corresponds to the theory that the state of the spin can be described by using only $S_j^z(t_K)$ having a value range of [-1,1] . The final solution $S_j^{zd}$ should be $S_j^{zd} = -1$ or 1. If $S_j^z(\tau) > 0$, $S_j^{zd} = 1$, and if $S_j^z(\tau) < 0$, $S_j^{zd} = -1$.

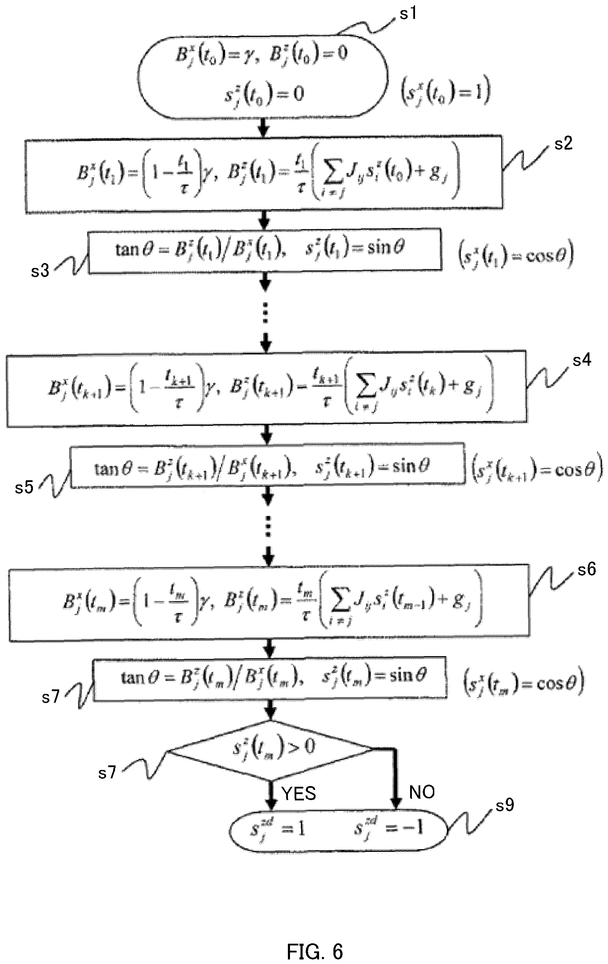

Fig. 6 illustrates a flowchart into which the aforementioned algorithm is organized. Here, $t_m = \tau$. Each of steps s1 to s9 in the flowchart of Fig. 6 corresponds to a process at a specified time between time t = 0 and t = $\tau$ in the timing chart of Fig. 5. Specifically, steps s2, s4, and s6 in the flowchart correspond to the above Equations (9) and (10) at t = $t_1$, $t_{k+l}$, and $t_m$, respectively. The final solution is determined at step s8 in such a way that if $s_j^z < 0$, $S_j^{zd} = -1$, and if $S_j^z > 0$, $S_j^{zd} = 1$ (s9) .

Until now, description has been made of how to solve the problem expressed as Equation (3). Next, description will be made of how a specific problem is expressed by Equation (3) including the local fields $g_j$ and the interactions between variables $J_{ij}$ (i, j = 1, 2, ..., N), by showing a specific example.

The specific problem here, in other words, the Ising model 1021 is assumed to be a problem of estimating the prices of currency pairs among financial product. In this case, it is assumed that the local fields $g_j$ are the actual prices and estimated prices of financial products (examples: foreign exchange rates, foreign exchange forward rates, stock indexes, product future prices, long/short open position ratios, the volatilities of various indicators, risk reversals, and the like). Note that the estimated price means a price determined based on the start point of the prices fixed at the present time (actual prices) and the sensitivity of a target currency pair to other financial products.

Here, $\sigma_j^{\wedge z}$ is considered to be a variable to make the price increase/decrease in a specified currency pair reflect the price increases/decreases in other financial products (which may include not only stock indexes or the like but also the concept of other currency pairs). The strength of the correlation between the rate of a currency pair and the price of another financial product, in other words, the sensitivity is expressed through the interactions between variables Jij. As mentioned earlier, the sensitivity explained in the present invention is not only the strength of the correlation (which can be referred to as the degree of influence) between foreign exchanges and stocks.

Through the above consideration, the interactions between variables $J_{ij}$ are concretely set, and the ground state of the Ising model 1021 expressed as Equation (3) is searched for, in other words, the ground state in which the aforementioned differences between the actual prices and the estimated prices smallest is searched for, to identify the balance point to which the rate change in each currency pair converges. The rate in this ground state is the estimated price estimated for the currency pair for a specified time in the future.

---Example of Data Structure---

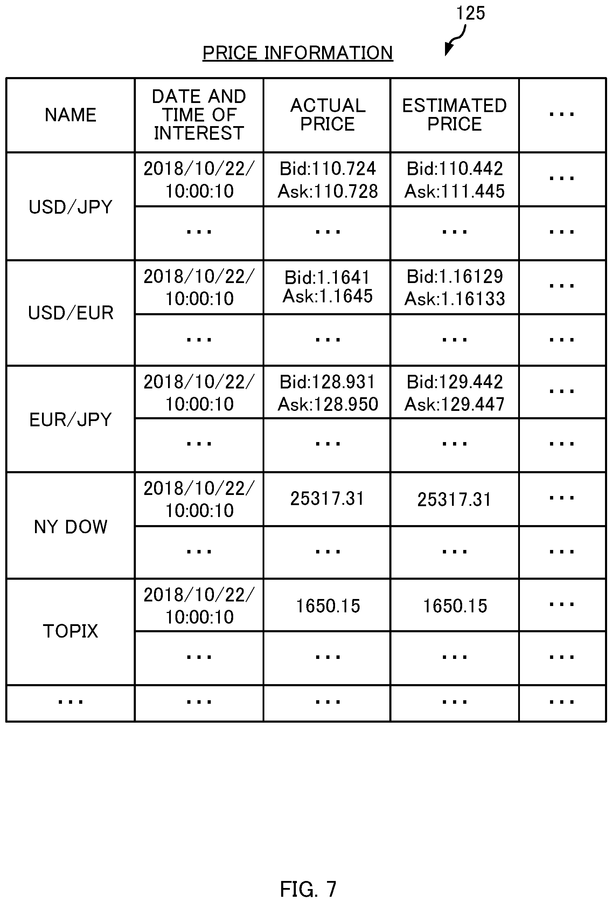

Next, a description will be given of various kinds of information used by the information providing device 100 of the present embodiment. Fig. 7 shows an example of price information 125 in the present embodiment.

The price information 125 in the present embodiment is a table in which price information on various financial products is accumulated. This price information includes actual prices which are actual market prices delivered from the financial-information delivering system 300. The price information 125 may include estimated prices that the information providing device 100, as an annealing machine, estimated for a specified time in the future.

The data structure of the price information 125 is composed of a group of records, each record including the name of a financial product, for example, USD/JPY, USD/EUR, NY Dow, or TOPIX, as a key, and data such as date and time of interest, and the actual price and estimated price and at the date and time of interest.

Although the examples of financial products in the price information 125 of Fig. 7 are limited for convenience of explanation, it is assumed that price information on other various financial products is stored in it (the same applies to the following descriptions).

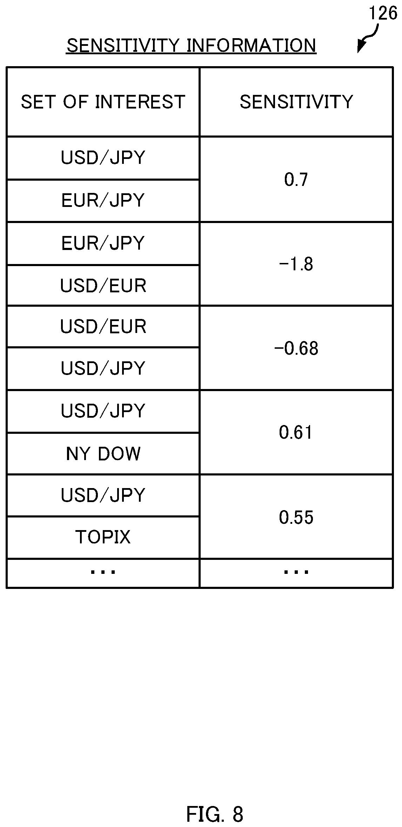

Fig. 8 shows an example of sensitivity information 126 in the present embodiment. The sensitivity information 126 in the present embodiment is a table in which information on the sensitivity of the price between financial products is accumulated. This information of the sensitivity is determined, for example, by performing correlation analysis on the price changes (the directions and degrees) in a specified period shown in the price information 125 in terms of the relationship between financial products.

The data structure of the sensitivity information 126 is composed of a group of records, each record including a set of financial products of interest the sensitivity of which are to be considered, such as USD/JPY and EUR/JPY, USD/JPY and NY Dow, and USD/JPY and TOPIX, which are used as a key, and data such as the sensitivity obtained for the pair.

---Procedure Example 1---

Hereinafter, a description will be given of an actual procedure of the information providing method in the present embodiment based on figures. The various operations for the information providing method described below are implemented by a program that the information providing device 100 reads into the memory or the like and executes. This program includes code for performing various operations described below.

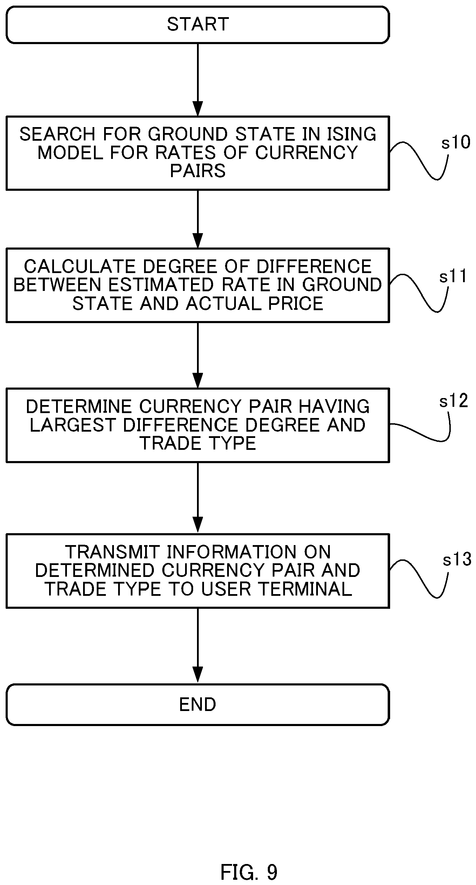

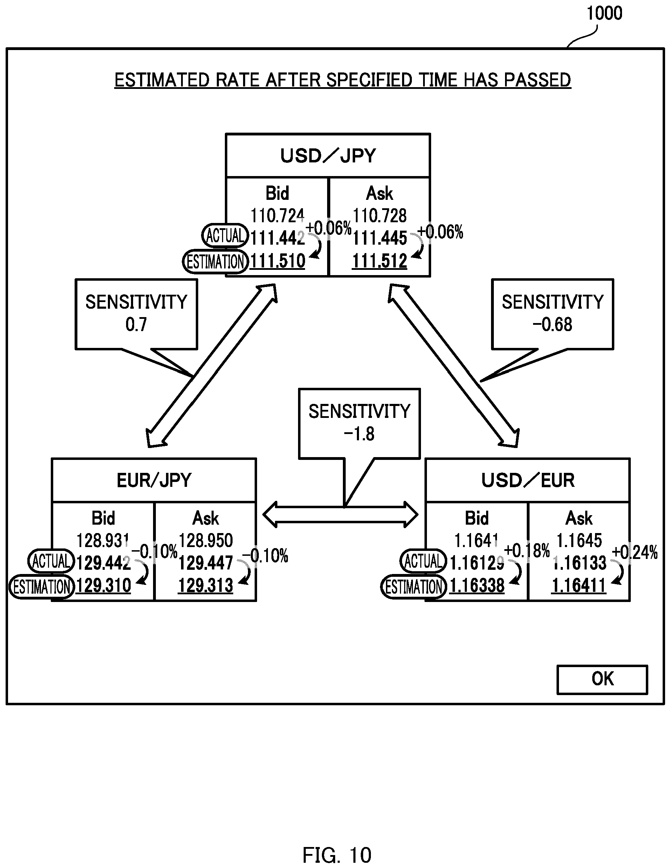

Fig. 9 is a diagram illustrating a procedure example 1 of the information providing method in the present embodiment. Examples of financial products to be treated here are assumed to be three currency pairs which are shown in Fig. 10. Here, although three currency pairs are described as examples to simplify the explanation, the financial products to be treated may include a greater number of currency pairs and other financial products in the actual case.

The rates of these three currency pairs have relationships in which a positive or negative sensitivity acts between them.

For example, the sensitivity between the rate of USD/JPY and the rate of EUR/JPY is 0.7. Hence, when the rate of USD/JPY increases by 1%, the rate of EUR/JPY, responding to this change, tends to increase by 0.7%.

The sensitivity between the rate of EUR/JPY and the rate of USD/EUR is -1.8. Hence, when the rate of EUR/JPY increases by 1%, the rate of USD/EUR, responding to this change, tends to decrease by 1.8%.

Here, regarding the up-or-down change in the rate based on the sensitivity described above, when the rate of one currency pair changes, the rate of the other currency pair does not necessarily occur immediately. Usually, there is a time lag between the up-or-down changes of the two pairs.

Specifically, in the time range corresponding to the "time lag", there is a difference between the value (the estimated price) that the rate is expected to reach in the future (considering the sensitivity) and the value of the rate at the present time (the actual price).

This difference can be an investment opportunity. If a buy or sell order is placed for the currency pair in the direction (of the increase/decrease of the rate) in which the difference decreases, a trading profit can probably be obtained with a high probability. Hence, the information providing device 100 of the present embodiment detects information on such differences (price differences) and provides it to the user terminal 200.

On the premise of the aforementioned situation, it is assumed that the information providing device 100 holds, as an Ising model 1021 to be processed, information on a model in which the aforementioned increase-decrease event in the rate of each currency pair is set as a spin, and the sensitivity of the rate between currency pairs is set as the strength of the interactions between the spins.

Note that information on the rates of currency pairs can be obtained from the price information 125. Information on the sensitivities can be obtained from the sensitivity information 126.

In the case of the three currency pairs illustrated in Fig. 10, for the interaction between the rates of USD/JPY and EUR/JPY, the sensitivity "0.7" is set to the strength of the interaction between the spins of the currency pairs. For the interaction between the rates of EUR/JPY and USD/EUR, the sensitivity "-1.8" is set to the strength of the interaction between the spins of the currency pairs. For the interaction between the rates of USD/EUR and USD/JPY, the sensitivity "-0.68" is set to the strength of the interaction between the spins of the currency pairs.

It is assumed that in the aforementioned Ising model 1021, one or more spins are set for each currency pair.

In the case where one spin is set for each currency pair, the spin can express only the direction of increase or decrease in the rate.

In the case of a configuration in which a plurality of spins (hereinafter referred to as a set of spins) are set for each currency pair, the set of spins can express the direction of increase or decrease in the rate as well as the degree of the increase or decrease. Specifically, the directions (+ direction/ - direction) and multitudes of the vectors of the set of spins correspond to the directions of increase or decrease in the rates and the degrees of the increase or decrease.

The information providing device 100, as an annealing machine, sets the Ising model 1021, in which the setting for the aforementioned three currency pairs has been made, as a problem and calculates the ground state in which the differences are smallest between the present rate (actual prices of each of the three currency pairs indicated in the price information 125 and the estimated rate (estimated price) determined based on the sensitivity of each of the three currency pairs to other financial products (s10). The search method itself for the ground state is the same as or similar to the process in existing techniques.

Specifically, a state in which the rates of all the currency pairs are settled after the present rate of each currency pair shifts toward the estimated rate (the theoretical estimated rate based on the sensitivity) as a specified time passes is searched for as the ground state.

Here, regarding the rates of the three currency pairs in the ground state determined by calculation, assume as illustrated in Fig. 10 that the rate of USD/JPY is "111.510" for "Bid" and "111.512" for "Ask", the rate of EUR/JPY is "129.310" for "Bid" and "129.313" for "Ask", and the rate of USD/EUR is "1.16338" for "Bid" and "1.16411" for "Ask".

These are the rates in the future after a certain time passes since the present time. Note that in the case of an Ising model 1021 in which one spin is set for each currency pair, the directions of increase or decrease in the rates of currency pairs in the aforementioned future are determined in the calculated ground state.

Next, the information providing device 100 calculates the degree of the difference between the actual rate and the estimated rate for each of the three currency pairs in the ground state obtained at s10 (s11).

For example, assume that the estimated rate of EUR/JPY in the ground state, affected by the rate change in USD/JPY, is "129.442" for "Bid" and "129.447" for "Ask", and the estimated rate of USD/EUR is "1.16338" for "Bid" and "1.16411" for "Ask".

Here, the estimated rate is divided by the present rate, in other words, the actual rate to calculate the change rate. As a result, the change rate of EUR/JPY is -0.1% for "Bid" and -0.1% for "Ask", and the change rate of USD/EUR is +0.18% for "Bid" and +0.24% for "Ask" from the calculation.

Such a difference between the change rates means a distortion of the rate between the currency pairs, and this can be an investment opportunity. Hence, the information providing device 100, for example, sorts information pieces on the currency pairs and the trade types according to the size of the difference (s12). Alternatively, a configuration may be possible in which the currency pair having the largest difference degree and the type of the trade are determined.

In the case of the aforementioned example, it can be determined that the corresponding currency pair is "USD/EUR", and that the trade type is "Ask".

The information providing device 100 transmits, to the user terminal 200, at least one of information pieces each including a currency pair detected at s12, the type of the trade, and the degree of the difference (s13) and then ends the process.

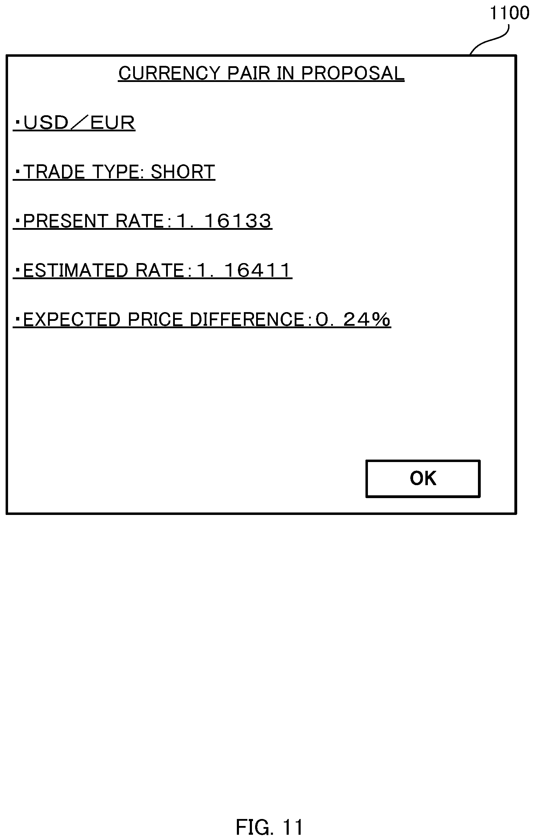

The user terminal 200, receiving such information provided, displays an information display screen 1100 as illustrated in Fig. 11 on an output unit such as a display. As illustrated in Fig. 11, this information display screen 1100 shows not only the currency pair and the type of the trade but also information on the present rate, estimated rate, and expected price difference (the degree of difference) of the currency pair.

The operator of the user terminal 200 views this information display screen 1100 and recognizes that a preferable investment opportunity has come and the operator will place a buy or sell order for this currency pair in the direction in which the difference decreases (the direction of the increase/decrease in the rate).

---Procedure Example 2---

In an assumed configuration, what is called the traveling salesman problem is applied to the sensitivities between the rates of currency pairs, unlike the aforementioned procedure example 1.

For a set of currency pairs having sensitivities, the information providing device 100 in this case executes a process of estimating the rate of one of the currency pairs in the set affected by a rate change in the other currency pair, for each of the series of currency pairs serially linked via sensitivities.

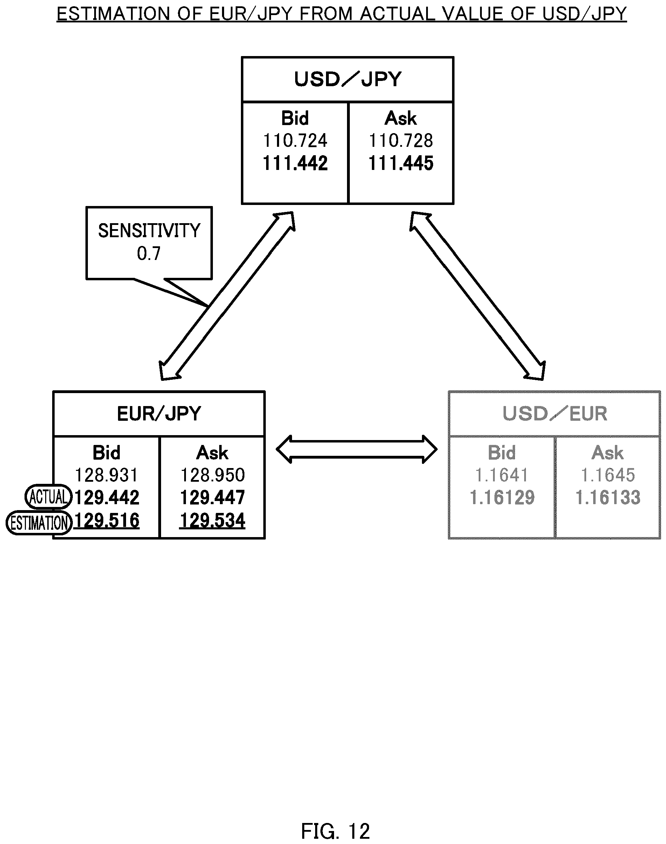

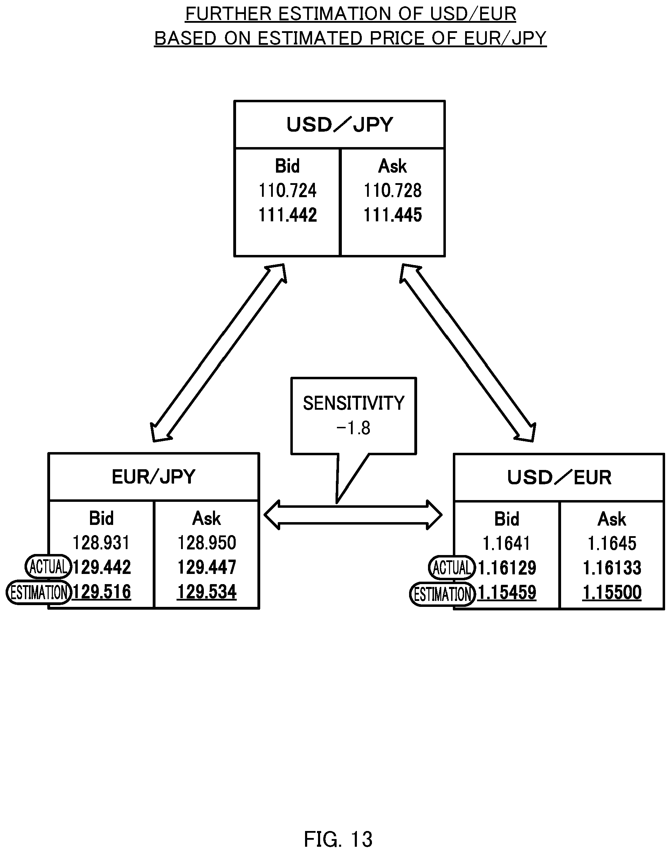

For example, for between USD/JPY and EUR/JPY, the change rate of USD/JPY for "Bid", for example, can be calculated as (111.442 - 110.724)/110.724 = 0.648% as illustrated in Fig. 12. Then, this result is multiplied by the sensitivity "0.7", and thus 0.00648 × 0.7 = 0.00453, in other words, 0.453%, which shows the change to occur in the "Bid" rate of EUR/JPY. Thus, as illustrated in Fig. 13, the estimated "Bid" rate of EUR/JPY can be calculated based on the present rate "128.931" as 128.931 × (1 + 0.00453) = 129.516. The information providing device 100 also performs calculation between EUR/JPY and USD/EUR in the same way.

However, estimating the rates in the order from USD/JPY to EUR/JPY and then from EUR/JPY to USD/EUR as described above does not always provide the optimum estimation. In addition, if the number of currency pairs to be processed is limited as in the aforementioned specific example, it will not cause a problem, but if the number of currency pairs to be processed and the number of other financial products that affect the rates of these currency pairs are huge, it is not realistic to process all the sequences linked via sensitivities.

For this reason, the information providing device 100 performs ground-state search on a specified Ising model 1021 to find what is the optimum order to perform the rate estimation among various currency pairs.

The Ising model 1021 in this case is assumed to be a model in which the increase-decrease event of the rate in each currency pair of a set of currency pairs such as USD/JPY and EUR/JPY is set to be a spin, and in which the sensitivity between the currency pairs included in the set is set to the strength of the interaction between the spins.

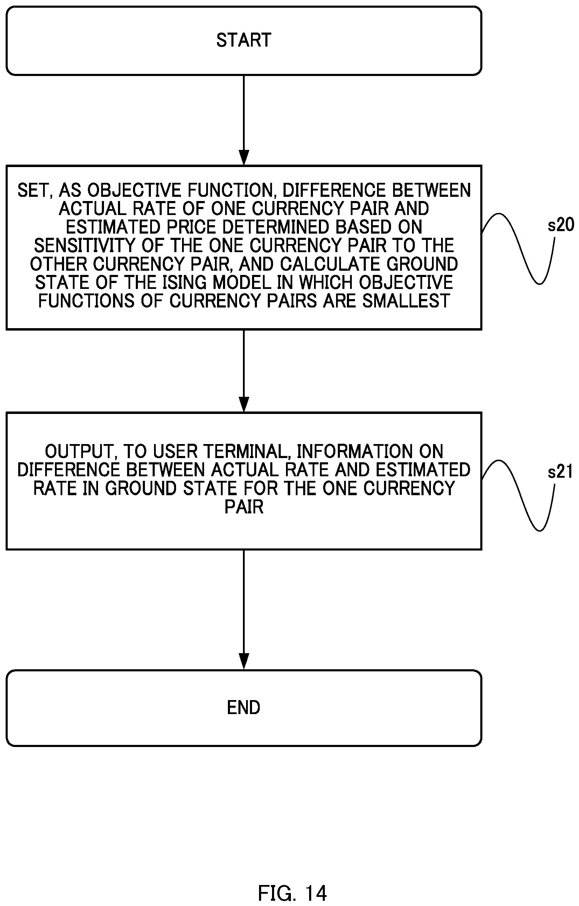

Then, the information providing device 100 as illustrated in the procedure example in Fig. 14 calculates the ground state of the Ising model 1021 in which, in each set of currency pairs, the difference is smallest between the actual rate of one currency pair in the aforementioned set indicated in the price information 125 and the estimated price determined based on the sensitivity of the one currency pair to the other currency pair (s20).

In other words, the information providing device 100 performs optimum route search by searching for the ground state in which (the total of) each difference is smallest between the estimated rate obtained on each set of currency pairs having a sensitivity and the actual rate.

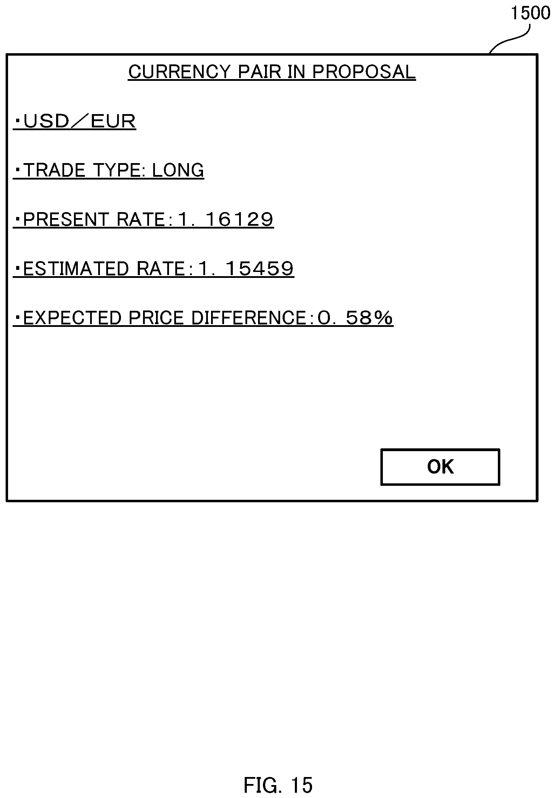

The information providing device 100 outputs, for the aforementioned one currency pair, information on the difference between the actual rate and the estimated rate in the ground state obtained at s20 (the screen 1500 in Fig. 15) to the user terminal 200 (s21) and ends the process.

Note that the aforementioned processing method is an example. For example, the aforementioned traveling salesman problem may be solved by obtaining the results for the case where estimated rates are calculated between a series of currency pairs in various routes (actual investment results based on the difference information), determining based on the results whether each route is good or bad, determining rules such as a rule that routes in which the total value of the sensitivities is large provide high information accuracy, for example, and solving the problem based on rules obtained.

Although a preferred embodiment to implement the present invention and the like have been described in detail as above, the present invention is not limited to this embodiment, but various modifications are possible within the range not departing from the gist thereof.

The present embodiment described above makes it possible to estimate information on financial products efficiently with favorable accuracy.

The description in the present specification makes at least the following things clear. Specifically, in the information providing device of the present embodiment, the calculation unit may execute the calculation on, as the Ising model, a model that includes a plurality of the spins and in which the sensitivities between the prices of the financial products are set as the strengths of the interactions between the spins, and the calculation unit may output, to a specified device, information on the degree of the difference between the actual price and the estimated price of at least one financial product of the financial products.

This configuration makes it possible to estimate not only the price increase-decrease direction estimated with one spin but also the degree of the price increase/decrease (the difference between the actual price and the price in the ground state). This in turn makes it possible to estimate information on financial products efficiently with more favorable accuracy.

In addition, in the information providing device of the present embodiment, the calculation unit may perform calculation on, as the Ising model, an Ising model in which the price increase-decrease event of a financial product included in a set of financial products of the financial products is set as a spin and in which the sensitivity between the prices of the financial products in the set is set as the strength of the interaction between the spins, and the calculation unit may output, to a specified device, information on the difference between the actual price of one financial product in the set and the estimated price of the financial product determined based on the sensitivity of the one financial product to the other financial product.

This configuration makes it possible to support, as appropriate, the situation in which an Ising model is used for what is called the traveling salesman problem and in turns makes it possible to estimate information on financial products efficiently and with further favorable accuracy.

The information providing device of the present embodiment may be a CMOS annealing machine that solves a combinatorial optimization problem on the Ising model.

In this configuration, the operation of the Ising model is simulated with circuits including semiconductor devices such as complementary metal oxide semiconductors (CMOS), and thus, it is possible to obtain practical solutions on combinatorial optimization problems, such as estimation of financial product prices that affect one another, efficiently in a room temperature. In turn, it is also possible to estimate information on financial products efficiently with further favorable accuracy.

In the information providing method of the present embodiment, the information processing device may execute the calculation on, as the Ising model, a model which is the Ising model that includes a plurality of the spins and in which the sensitivities between the prices of the financial products are set as the strengths of the interactions between the spins, and the information processing device may output, to a specified device, information on the degree of the difference between the actual price and the estimated price of at least one financial product of the financial products.

In addition, in the information providing method of the present embodiment, the information processing device may perform calculation on, as the Ising model, an Ising model in which the price increase-decrease event of a financial product included in a set of financial products of the financial products is set as a spin and in which the sensitivity between the prices of the financial products in the set is set as the strength of the interaction between the spins, and the information processing device may output, to a specified device, information on the difference between the actual price of one financial product in the set and the estimated price of the financial product determined based on the sensitivity of the one financial product to the other financial product.

In addition, in the information providing method of the present embodiment, the information processing device may be an annealing machine that solves a combinatorial optimization problem on the Ising model.

[Reference Signs List]

| | |
|---|---|
| 10 | network |
| 100 | information providing device (annealing machine) |
| 101 | storage unit |
| 102 | program |
| 1021 | Ising model |
| 103 | memory |
| 104 | calculation unit |
| 105 | communication unit |
| 125 | price information |
| 126 | sensitivity information |
| 200 | user terminal |
| 300 | financial-information delivering system |

**Claims**

1. An information providing device comprising:

    a storage unit that stores price information on various financial products; and
    a calculation unit that performs calculation on an Ising model in which a price increase-decrease event of each financial product on an estimated price determined based on an actual price of the financial product indicated in the price information and a sensitivity of the financial product to another financial product is set as a spin, and in which sensitivities between prices of the financial products are set as the strengths of interactions between the spins, wherein
    the calculation unit outputs, to a specified device, information on a future price of at least one financial product of the financial products based on a result of the calculation.

2. The information providing device according to claim 1, wherein
    the calculation unit executes the calculation on, as the Ising model, an Ising model that includes a plurality of the spins and in which the sensitivities between the prices of the financial products are set as the strengths of the interactions between the spins, and
    the calculation unit outputs, to the specified device, information on the degree of the difference between the actual price and the estimated price of at least one financial product of the financial products.

3. The information providing device according to claim 1, wherein
    the calculation unit performs calculation on, as the Ising model, an Ising model in which the price increase-decrease event of each financial product included in a set of financial products of the financial products is set as a spin and in which the sensitivity between the prices of the financial products in the set is set as the strength of the interaction between the spins, and
    the calculation unit outputs, to the specified device, information on the difference between the actual price of one financial product in the set and the estimated price of the one financial product determined based on the sensitivity of the one financial product to the other financial product.

4. The information providing device according to claim 1, wherein
the information providing device is a CMOS annealing machine that solves a combinatorial optimization problem on the Ising model.

5. An information providing method comprising:

performing, in an information processing device including a storage unit that stores price information on various financial products, calculation on an Ising model in which a price increase-decrease event of each financial product on an estimated price determined based on an actual price of the financial product indicated in the price information and a sensitivity of the financial product to another financial product is set as a spin, and in which sensitivities between prices of the financial products are set as the strengths of interactions between the spins; and
outputting, from the information processing device to a specified device, information on a future price of at least one financial product of the financial products based on a result of the calculation.

6. The information providing method according to claim 5, wherein
the information processing device executes the calculation on, as the Ising model, an Ising model that includes a plurality of the spins and in which the sensitivities between the prices of the financial products are set as the strengths of the interactions between the spins, and
the information processing device outputs, to the specified device, information on the degree of the difference between the actual price and the estimated price of at least one financial product of the financial products.

7. The information providing method according to claim 5, wherein
the information processing device performs calculation on, as the Ising model, an Ising model in which the price increase-decrease event of each financial product included in a set of financial products of the financial products is set as a spin and in which the sensitivity between the prices of the financial products in the set is set as the strength of the interaction between the spins, and
the information processing device outputs, to the specified device, information on the difference between the actual price of one financial product in the set and the estimated price of the one financial product determined based on the sensitivity of the one financial product to the other financial product.

8. The information providing method according to claim 5, wherein
the information processing device is a CMOS annealing machine that solves a combinatorial optimization problem on the Ising model.

100

INFORMATION
PROVIDING
DEVICE

10

200

USER
TERMINAL

· · ·

300

FINANCIAL-
INFORMATION
DELIVERING
SYSTEM

· · ·

FIG. 1

## AT START OF OBSERVATION
## (ASSUMED TO BE STATE WHERE MARKET IS IN BALANCE)

FIG. 2

## ACTUAL VALUES AFTER SPECIFIED TIME HAS PASSED

| USD／JPY | |
|---|---|
| **Bid** | **Ask** |
| 110.724 | 110.728 |
| **111.442** | **111.445** |

SENSITIVITY
0.7

SENSITIVITY
−0.68

SENSITIVITY
−1.8

| EUR／JPY | |
|---|---|
| **Bid** | **Ask** |
| 128.931 | 128.950 |
| **129.442** | **129.447** |

| USD／EUR | |
|---|---|
| **Bid** | **Ask** |
| 1.1641 | 1.1645 |
| **1.16129** | **1.16133** |

FIG. 3

FIG. 4

FIG. 5

s1
$$B_j^x(t_0) = \gamma, \quad B_j^z(t_0) = 0$$
$$s_j^z(t_0) = 0 \qquad \left(s_j^x(t_0) = 1\right)$$

s2
$$B_j^x(t_1) = \left(1 - \frac{t_1}{\tau}\right)\gamma, \quad B_j^z(t_1) = \frac{t_1}{\tau}\left(\sum_{i \neq j} J_{ij} s_i^z(t_0) + g_j\right)$$

s3
$$\tan\theta = B_j^z(t_1)/B_j^x(t_1), \quad s_j^z(t_1) = \sin\theta \qquad \left(s_j^x(t_1) = \cos\theta\right)$$

s4
$$B_j^x(t_{k+1}) = \left(1 - \frac{t_{k+1}}{\tau}\right)\gamma, \quad B_j^z(t_{k+1}) = \frac{t_{k+1}}{\tau}\left(\sum_{i \neq j} J_{ij} s_i^z(t_k) + g_j\right)$$

s5
$$\tan\theta = B_j^z(t_{k+1})/B_j^x(t_{k+1}), \quad s_j^z(t_{k+1}) = \sin\theta \qquad \left(s_j^x(t_{k+1}) = \cos\theta\right)$$

s6
$$B_j^x(t_m) = \left(1 - \frac{t_m}{\tau}\right)\gamma, \quad B_j^z(t_m) = \frac{t_m}{\tau}\left(\sum_{i \neq j} J_{ij} s_i^z(t_{m-1}) + g_j\right)$$

s7
$$\tan\theta = B_j^z(t_m)/B_j^x(t_m), \quad s_j^z(t_m) = \sin\theta \qquad \left(s_j^x(t_m) = \cos\theta\right)$$

s7
$$s_j^z(t_m) > 0$$

YES — NO

s9
$$s_j^{zd} = 1 \qquad s_j^{zd} = -1$$

FIG. 6

PRICE INFORMATION    125

| NAME | DATE AND TIME OF INTEREST | ACTUAL PRICE | ESTIMATED PRICE | . . . |
|---|---|---|---|---|
| USD/JPY | 2018/10/22/ 10:00:10 | Bid:110.724 Ask:110.728 | Bid:110.442 Ask:111.445 | . . . |
| | . . . | . . . | . . . | . . . |
| USD/EUR | 2018/10/22/ 10:00:10 | Bid:1.1641 Ask:1.1645 | Bid:1.16129 Ask:1.16133 | . . . |
| | . . . | . . . | . . . | . . . |
| EUR/JPY | 2018/10/22/ 10:00:10 | Bid:128.931 Ask:128.950 | Bid:129.442 Ask:129.447 | . . . |
| | . . . | . . . | . . . | . . . |
| NY DOW | 2018/10/22/ 10:00:10 | 25317.31 | 25317.31 | . . . |
| | . . . | . . . | . . . | . . . |
| TOPIX | 2018/10/22/ 10:00:10 | 1650.15 | 1650.15 | . . . |
| | . . . | . . . | . . . | . . . |
| . . . | . . . | . . . | . . . | . . . |

FIG. 7

SENSITIVITY INFORMATION    126

| SET OF INTEREST | SENSITIVITY |
|---|---|
| USD/JPY | 0.7 |
| EUR/JPY | |
| EUR/JPY | −1.8 |
| USD/EUR | |
| USD/EUR | −0.68 |
| USD/JPY | |
| USD/JPY | 0.61 |
| NY DOW | |
| USD/JPY | 0.55 |
| TOPIX | |
| . . . | . . . |

FIG. 8

```
                        ┌─────────────────────────┐
                        │          START          │
                        └─────────────────────────┘
                                     │
                                     ▼
              ┌──────────────────────────────────────┐
              │   SEARCH FOR GROUND STATE IN ISING    │        s10
              │    MODEL FOR RATES OF CURRENCY        │
              │               PAIRS                   │
              └──────────────────────────────────────┘
                                     │
                                     ▼
              ┌──────────────────────────────────────┐
              │   CALCULATE DEGREE OF DIFFERENCE      │        s11
              │  BETWEEN ESTIMATED RATE IN GROUND     │
              │       STATE AND ACTUAL PRICE          │
              └──────────────────────────────────────┘
                                     │
                                     ▼
              ┌──────────────────────────────────────┐
              │   DETERMINE CURRENCY PAIR HAVING      │        s12
              │    LARGEST DIFFERENCE DEGREE AND      │
              │              TRADE TYPE               │
              └──────────────────────────────────────┘
                                     │
                                     ▼
              ┌──────────────────────────────────────┐
              │      TRANSMIT INFORMATION ON          │        s13
              │  DETERMINED CURRENCY PAIR AND         │
              │   TRADE TYPE TO USER TERMINAL         │
              └──────────────────────────────────────┘
                                     │
                                     ▼
                        ┌─────────────────────────┐
                        │           END           │
                        └─────────────────────────┘
```

FIG. 9

1000

## ESTIMATED RATE AFTER SPECIFIED TIME HAS PASSED

**USD／JPY**

| Bid | Ask |
|---|---|
| 110.724 | 110.728 |
| (ACTUAL) 111.442 | (ACTUAL) 111.445 |
| +0.06% | +0.06% |
| (ESTIMATION) 111.510 | (ESTIMATION) 111.512 |

SENSITIVITY
0.7

SENSITIVITY
-0.68

SENSITIVITY
-1.8

**EUR／JPY**

| Bid | Ask |
|---|---|
| 128.931 | 128.950 |
| (ACTUAL) 129.442 | (ACTUAL) 129.447 |
| -0.10% | -0.10% |
| (ESTIMATION) 129.310 | (ESTIMATION) 129.313 |

**USD／EUR**

| Bid | Ask |
|---|---|
| 1.1641 | 1.1645 |
| (ACTUAL) 1.16129 | (ACTUAL) 1.16133 |
| +0.18% | +0.24% |
| (ESTIMATION) 1.16338 | (ESTIMATION) 1.16411 |

OK

FIG. 10

1100

CURRENCY PAIR IN PROPOSAL

・USD／EUR

・TRADE TYPE: SHORT

・PRESENT RATE:1. 16133

・ESTIMATED RATE:1. 16411

・EXPECTED PRICE DIFFERENCE:0. 24%

OK

FIG. 11

ESTIMATION OF EUR/JPY FROM ACTUAL VALUE OF USD/JPY

**USD/JPY**

| Bid | Ask |
|-----|-----|
| 110.724 | 110.728 |
| **111.442** | **111.445** |

SENSITIVITY
0.7

**EUR/JPY**

| Bid | Ask |
|-----|-----|
| 128.931 | 128.950 |
| (ACTUAL) **129.442** | **129.447** |
| (ESTIMATION) **129.516** | **129.534** |

**USD/EUR**

| Bid | Ask |
|-----|-----|
| 1.1641 | 1.1645 |
| 1.16129 | 1.16133 |

FIG. 12

## FURTHER ESTIMATION OF USD/EUR
## BASED ON ESTIMATED PRICE OF EUR/JPY

FIG. 13

START

SET, AS OBJECTIVE FUNCTION, DIFFERENCE BETWEEN ACTUAL RATE OF ONE CURRENCY PAIR AND ESTIMATED PRICE DETERMINED BASED ON SENSITIVITY OF THE ONE CURRENCY PAIR TO THE OTHER CURRENCY PAIR, AND CALCULATE GROUND STATE OF THE ISING MODEL IN WHICH OBJECTIVE FUNCTIONS OF CURRENCY PAIRS ARE SMALLEST

s20

OUTPUT, TO USER TERMINAL, INFORMATION ON DIFFERENCE BETWEEN ACTUAL RATE AND ESTIMATED RATE IN GROUND STATE FOR THE ONE CURRENCY PAIR

s21

END

FIG. 14

1500

CURRENCY PAIR IN PROPOSAL

·USD／EUR

·TRADE TYPE: LONG

·PRESENT RATE：1. 16129

·ESTIMATED RATE：1. 15459

·EXPECTED PRICE DIFFERENCE：0. 58%

OK

FIG. 15

**INTERNATIONAL SEARCH REPORT**

| International application No. |
| --- |
| PCT/JP2019/041985 |

**A. CLASSIFICATION OF SUBJECT MATTER**
G06Q 40/06(2012.01)i
FI: G06Q40/06

According to International Patent Classification (IPC) or to both national classification and IPC

**B. FIELDS SEARCHED**

Minimum documentation searched (classification system followed by classification symbols)
G06Q10/00-99/00

Documentation searched other than minimum documentation to the extent that such documents are included in the fields searched
| | |
| --- | --- |
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2003-331128 A (TOSHIBA CORP.) 21.11.2003 (2003-11-21), entire text, all drawings | 1-8 |
| A | 左尾 将隆 ほか，デジタル革新を支える人工知能 Zinrai－組合せ最適化問題を高速に解くデジタルアニーラの活用技術，FUJITSU, 01 July 2018, vol. 69, no. 4, pp. 77-83, ISSN 0016-2515, in particular, pp. 77, 78, 80, non-official translation (SAO, Masataka et al., "Artificial intelligence Zinrai supporting digital innovation-Application of Digital Annealer for Faster Combinatorial Optimization") | 1-8 |

☒ Further documents are listed in the continuation of Box C.  ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 14 January 2020 (14.01.2020) | 21 January 2020 (21.01.2020) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
| --- |
| PCT/JP2019/041985 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | 研究開発－基礎探索－複雑化する社会システムを解く新原理コンピューティング(CMOS イジングコンピュータ)，日立評論, 01 January 2016, vol. 98, no. 1, 2, pp. 136-138, ISSN 0367-5874, in particular, p. 137, non-official translation (Research and development- Basic search- New Principle Computing to Solve Complex Social Systems(CMOS Ising computer)", Hitachi Review) | 1-8 |

Form PCT/ISA/210 (continuation of second sheet) (January 2015)

**INTERNATIONAL SEARCH REPORT**
Information on patent family members

International application No.

PCT/JP2019/041985

| Patent Documents referred in the Report | Publication Date | Patent Family | Publication Date |
|---|---|---|---|
| JP 2003-331128 A | 21 Nov. 2003 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016157333 A

**Non-patent literature cited in the description**

- **E. FARHI et al.** A quantum adiabatic evolution algorithm applied to random instances of an NP-complete problem. *Science,* 2001, vol. 292, 472

- **F. BARAHONA.** On the computational complexity of Ising spin glass models. *J. Phys. A: Math. Gen.,* 1982, vol. 15, 3241